# EUROPÄISCHE PATENTSCHRIFT

(11) **EP 2 160 065 B1**
(45) Veröffentlichungstag und Bekanntmachung des Hinweises auf die Patenterteilung: **27.06.2012**
(21) Anmeldenummer: 08163174.9
(22) Anmeldetag: 28.08.2008
(51) Int. Cl.: G01S 5/02, H04W 64/00

(54) **Verfahren und Ortungsvorrichtung zur Ortung mindestens eines Mobilfunkgerätes in einem Mobilfunknetz**
Method and location apparatus for locating at least one mobile radio device in a mobile radio network
Procédé et appareil de localisation d'au moins un dispositif de radio mobile dans un réseau radio mobile

(43) Veröffentlichungstag der Anmeldung: 03.03.2010
(73) Patentinhaber: Tektronix International Sales GmbH, 8212 Neuhausen (CH)
(72) Erfinder: Gänger, Karsten, 12309 Berlin (DE); Kreher, Ralf, 12587 Berlin (DE); Plogsties, Jens, 10407 Berlin (DE); Klopfer, Armin, 14624 Dallgow (DE)
(74) Vertreter: Schurack, Eduard F.

(56) Entgegenhaltungen:
- EP-A- 0 800 319
- WO-A-02/082832
- US-A1- 2002 025 822
- US-A1- 2008 039 114
- MOULY M. ET AL: 'RADIO RESOURCE MANAGEMENT', 01 Januar 1993, GSM SYSTEM FOR MOBILE COMMUNICATIONS, LASSAY-LES-CHATEAUX, EUROPE MEDIA, FR, PAGE(S) 308 - 430 XP000860006

## Beschreibung

Die vorliegende Erfindung betrifft ein Verfahren zur Ortung mindestens eines Mobilfunkteilnehmers in einem Mobilfunknetz, wobei das Mobilfunknetz zumindest folgende Eigenschaften umfasst: Die kleinste adressierbare Einheit ist eine Zelle, wobei jeder Zelle eine Sendestation zugeordnet ist; zumindest bei einem Verbindungsaufbau wird eine Information über die Empfangsfeldstärke und ein mit der Entfernung des Mobilfunkteilnehmers zur Sendestation der aktiven Zelle korrelierter Parameter ermittelt; mit und/oder ohne aktive Mobilfunkverbindung sendet ein Mobilfunkteilnehmer mindestens einmal einen Messbericht, wobei in dem Messbericht eine Aufstellung vorgesehen ist, die mindestens zwei Sendestationen umfasst, wobei jeder Sendestation ein mit der Empfangsfeldstärke eines Signals von dieser Sendestation korrelierter Wert zugeordnet ist. Sie betrifft überdies eine entsprechende Ortungsvorrichtung sowie ein Computerprogrammprodukt zur Ausführung eines erfindungsgemäßen Verfahrens.

Im Nachfolgenden wird mit Zelle, unabhängig von der Belegung dieses Begriffs im Mobilfunkbereich, die kleinste adressierbare Einheit bezeichnet. Bei einem UMTS-Netz beispielsweise ist die komplette Abstrahlumgebung, d. h. 360°, einer Basisstation, die dort mit NodeB bezeichnet wird, in bis zu sechs getrennte Bereiche aufgeteilt. Jedem dieser Bereiche ist eine bestimmte Identifizierung zugeordnet, so dass jeder dieser Bereiche als kleinste adressierbare Einheit, d. h. Zelle, im Sinne der nachfolgenden Ausführungen zu verstehen ist, wenngleich die jedem Bereich zugeordnete Sendestation dieselbe ist. Entsprechendes gilt für andere Netzstandards, beispielsweise ein GSM-Netz.

Die Ortung von Mobilfunkteilnehmem mit hoher Genauigkeit ist aus mannigfaltigen Gründen von hoher Bedeutung. Mobilfunkteilnehmer bewegen sich fast unkorreliert im Gelände, während Services eines Mobilfunkanbieters genutzt werden können. Kommt es zu einem Problem mit der Verbindung, beispielsweise zu einem Call-Abbruch, so ist es für den Provider außerordentlich wichtig, den Ort zu lokalisieren, an dem das Problem aufgetreten ist. Derartige Probleme werden beispielsweise unter dem Begriff Coverage-Probleme zusammengefasst.

Ein aus dem Stand der Technik bekannter Ansatz sieht vor, aus Protokollnachrichten Angaben über die Zelle auszulesen, in der sich ein Mobilfunkteilnehmer befindet. Über eine externe Datenbasis, in der die Koordinaten der Zellen eingetragen sind, kann so relativ ungenau auf Zell-Ausleuchtungsgröße der Ort des Mobilfunkteilnehmers bestimmt werden.

Eine höhere Genauigkeit kann durch Drive-Tests erzielt werden, bei denen in einem Fahrzeug ein mit einem GPS-Gerät gekoppeltes Mobilfunkgerät mitgeführt wird. Derartige Drive-Tests sind jedoch zeitaufwändig und damit kostenintensiv. Dies betrifft jedoch nur die Ortung von Test-Mobilfunkgeräten während der Testfahrten. Nicht ermöglicht wird dadurch die Lokalisierung echter Nutzer im Netz, die kein GPS-Gerät mit sich führen.

Die WO 02/082832 A2 offenbart ein Verfahren zum Lokalisieren eines Mobilfunkgeräts basierend auf Berichten, die von diesem an eine Sendestation gesendet werden. Die Berichte enthalten Kenndaten zu Empfangsfeldstärken betreffend die umliegenden Sendestationen. Zum Lokalisieren des Mobilfunkgeräts werden die Kenndaten mit einer Feldstärken-Datenbasis verglichen. Es sind zwei Möglichkeiten offenbart, die Feldstärke-Datenbasis zu bilden: durch Berechnung und durch Messfahrten mit zusätzlichen GPS-Positionsempfängem. Im Zusammenhang mit einer nachträglichen Korrektur oder Vergrößerung der Feldstärken-Datenbasis während des Betriebs eines Ortungssystems ist offenbart, dazu Mobilfunkgeräte mit GPS-Empfängem zu nutzen.

In der Veröffentlichung "GSM System for Mobile Communications" von M. Mouly et al. ist in dem Kapitel "Radio Resource Management" im Zusammenhang mit einer Steuerung der Sendeleistung von miteinander kommunizierenden Geräten und mit einem Ausgleich eines Zeitversatzes aufgrund des örtlichen Abstands der Geräte (propagation delay) beschrieben, in dem mobilen Gerät die Empfangsfeldstärke und den Zeitversatz zu ermitteln (Mouly et al: "Radio Resource Management", 1. Januar 1993, GSM SYSTEMS FOR MOBILE COMMUNICATIONS, Lassay-les-Chateaux, Europe Media, Fr., Seiten 308-430).

Die Aufgabe der vorliegenden Erfindung besteht deshalb darin, ein Verfahren zur Ortung, eine Ortungsvorrichtung sowie ein entsprechendes Computerprogrammprodukt zur Ausführung des Verfahrens bereitzustellen, das eine möglichst genaue Ortung des Mobilfunkteilnehmers mit geringem Aufwand ermöglicht.

Diese Aufgabe wird gelöst durch ein Verfahren mit den Merkmalen von Patentanspruch 1, eine Ortungsvorrichtung mit den Merkmalen von Patentanspruch 10 sowie durch ein Computerprogrammprodukt mit den Merkmalen von Patentanspruch 14.

Die vorliegende Erfindung basiert auf der Erkenntnis, dass durch geschickte Auswertung von Information, die ohnehin im Netz übertragen wird, eine Ortung des Mobilfunkteilnehmers ohne Drive-Tests und ohne dezidierte Messgeräte möglich ist. Dazu wird aus der beim Verbindungsaufbau ermittelten Information pro Zelle eine Tabelle angelegt, in der den jeweiligen Empfangsfeldstärken mindestens ein Entfernungsparameter zur Sendestation der Zelle zugeordnet ist. Anschließend wird von mindestens einem, im Messbericht gesendeten, mit der Empfangsfeldstärke korrelierten Wert aus der Tabelle der zugeordnete Entfernungsparameter zur Sendestation der jeweiligen Zelle ausgelesen und schließlich der Punkt ermittelt, der den/die ausgelesenen Entfemungsparameter erfüllt.

Je nach dem wie viele Entfemungsparameter dabei verknüpft werden, lässt sich der Ort des Mobilfunkteilnehmers sehr genau ermitteln. Die Ortung lässt sich sowohl in einem aktiven Zustand, d. h. es besteht eine aktive Mobilverbindung von Sprache, Daten oder Kontrolldaten, vornehmen als auch in einem Leerlaufzustand, also ohne aktive Mobilfunkverbindung. Überdies ist die Ortung nicht nur zu einem bestimmten Zeitpunkt, beispielsweise zum Anrufbeginn, möglich, sondern zu beliebigen Zeitpunkten. Die vorliegende Erfindung setzt auf der aus dem Stand der Technik bekannten Vorgehensweise auf, die eine Bestimmung des Orts des Mobilfunkteilnehmers auf Zell-Ausleuchtungsgröße ermöglicht. Sie benutzt jedoch zur genauen Lokalisierung weitere Parameter und berücksichtigt die spezifischen Feldausbreitungsbedingungen in den verschiedenen Zellen durch neues Korrelieren von Wertepaaren zu jeder Zelle.

Da von Zelle zu Zelle die Topologie und durch die spezifische Bebauung die Feldausbreitungsbedingungen variieren, wird für jede Zelle eine Datenbasis aus Empfangsparametem und reporteten Entfernungsparametern, beispielsweise TA (Timing Advance im GSM-Standard oder Propagation Delay im UMTS-Standard), angelegt. Das Verfahren benutzt einen Algorithmus, der nun in der Lage ist, für jede Zelle statistisch wahrscheinliche Wertepaare vorzuhalten. Durch die Berücksichtigung von genauso erhobenen Daten aus den Nachbarzellen können korrekte Paare gefunden werden und falsche ausgeschlossen werden. Dies kann beispielsweise durch Triangulation durchgeführt werden.

Durch dieses Vorgehen kann aus einer passiv gemessenen Feldstärke, zum Beispiel aus empfangenen Nachrichten von dem Mobilfunkteilnehmer, auf die Entfernung des Mobilfunkteilnehmers zurückgeschlossen werden. Bevorzugt durch anschließende Triangulation von ebenfalls erhobenen Daten aus den Nachbarzellen ist eine Ortsbestimmung möglich. Durch weiterführendes Inter- und Extrapolieren von zeitdiskreten Messwerten kann eine kontinuierliche Ortung ermöglicht werden. Durch die spezifische passive Einmessung jeder Zelle, d. h. eine Lemphase, ist für die unterschiedlichste Bebauung ein repräsentatives Ergebnis möglich.

Während bei Auswertung mindestens eines Entfernungsparameters eine Genauigkeit auf ein "Tortenscheibchen" innerhalb einer Zelle, das beispielsweise eine Breite von 210 m (±105 m) im UMTS-Standard aufweist, erzielt werden kann - was bereits eine deutliche Verbesserung gegenüber dem Stand der Technik darstellt - lassen sich noch genauere Ergebnisse erzielen, wenn die Entfernungsparameter zu mindestens zwei Sendestationen ausgelesen und zum Ermitteln des Standorts verwendet werden. Besonders vorteilhaft kann dabei auch ein Öffnungswinkel einer Sendestation einer Zelle berücksichtigt werden. Dadurch lassen sich unrichtig ermittelte Punkte ausschließen: Wenn nämlich zwei Entfernungsparameter ausgewertet werden, ergeben sich aufgrund der zwei Kreise um die jeweilige Sendestation der Zelle zwei Schnittpunkte. Sofern einer außerhalb des in Betracht kommenden Öffnungswinkels einer der beiden Zellen liegt, kann dieser Punkt ausgeschlossen und damit der andere Punkt als der Richtige ermittelt werden.

Da die Ereignisse, zu denen eine Ortung des Mobilfunkteilnehmers besonders erwünscht ist, nicht unbedingt mit den Zeitpunkten des Sendens eines Messberichts zusammenfallen, kann der Ort, an dem sich der Mobilfunkteilnehmer zum Zeitpunkt dieses Ereignisses befunden hat, besonders geschickt durch Interpolation ermittelt werden. Dazu wird für den Zeitpunkt und mindestens eine Sendestation der Empfangsfeldstärke und/oder der Entfernungsparameter zu der mindestens einen Sendestation durch Interpolation ermittelt. Für die Interpolation können unterschiedliche lineare oder nichtlineare Verfahren Anwendung finden.

Handelt es sich bei dem besonderen Ereignis beispielsweise um einen Verbindungsabbruch, so kann ausgehend von den Entfernungsparametem, die anhand des zuletzt gesendeten Messberichts ermittelt wurden, der Entfemungsparameter zu mindestens einer Sendestation, bevorzugt zu mindestens zwei Sendestationen, für den Zeitpunkt des Verbindungsabbruchs durch Extrapolation ermittelt werden. Auch hierfür können unterschiedliche lineare oder nichtlineare Algorithmen verwendet werden.

Bevorzugt wird der Messbericht fortwährend gesendet, beispielsweise regelmäßig alle 100 ms bis 10 s, oder ereignisbezogen, insbesondere beim Wechsel der Sendestation, die mit der größten Empfangsfeldstärke empfangen wird. Dadurch lässt sich bei geringer Bandbreite dennoch eine sehr genaue Ortung des Mobilfunkteilnehmers vornehmen. Für besondere Problemfälle lässt sich durch Eingriff in das Protokoll der Luftschnittstelle die Rate, mit der der Messbericht gesendet wird, vorübergehend erhöhen, um eine sehr genaue Ortung zu ermöglichen.

Der Entfemungsparameter wird bevorzugt aus dem Timing Advance-Parameter eines 2G-Mobilfunknetzes oder aus dem Propagation Delay-Parameter eines 3G-Netzes ermittelt oder entspricht diesem. Beim Propagation Delay-Parameter entspricht 1 Bit 78 m, so dass die Auflösung der Entfernung im Idealfall ±39m beträgt. In manchen Fällen wird eine Genauigkeit von min. 3 Bit reportet, was immerhin einer Genauigkeit von ±117m entspricht.

Die Tabelle kann für unterschiedliche Mobilfunkgeräte, insbesondere unterschiedliche Typen von Mobitfunkgeräten angelegt werden, wobei das Auslesen und/oder das Ermitteln des Standorts des Mobilfunkteilnehmers mobitfunkgerätespezifisch erfolgt. Die Tabelle kann mittels Testfahrten gewonnen werden. Im Gegensatz zum Stand der Technik können hierfür herkömmliche Mobilfunkgeräte ohne GPS-Gerät benutzt werden. Damit lässt sich die Qualität, d.h. die Auflösung der Tabelle, erheblich verbessern.

Die mit Bezug auf das erfindungsgemäße Verfahren vorgesteilten bevorzugten Ausführungsformen und deren Vorteile gelten entsprechend, soweit anwendbar, für eine erfindungsgemäße Ortungsvorrichtung sowie ein erfindungsgemäßes Computerprogrammprodukt.

Eine bevorzugte Weiterbildung einer erfindungsgemäßen Ortungsvorrichtung umfasst mindestens eine Speichervorrichtung zum Anlegen der Tabelle. Bevorzugt umfaßt eine erfindungsgemäße Ortungsvorrichtung weiterhin eine Anzeigevorrichtung, wobei die Ortungsvorrichtung ausgelegt ist, die Ortskoordinaten des ermittelten Punkts anzuzeigen. Besonders bevorzugt ist sie ausgelegt, eine Landkarte mit dem ermittelten Punkt und den empfangbaren Sendestationen anzuzeigen. Dadurch ist es einem Benutzer ermöglicht, besonders schnell und zuverlässig den ermittelten Ort und dessen Umgebung zu erkennen.

Weitere bevorzugte Ausführungsformen ergeben sich aus den Unteransprüchen.

Im Nachfolgenden werden nunmehr Ausführungsbeispiele des erfindungsgemäßen Verfahrens unter Bezugnahme auf die beigefügten Zeichnungen näher beschrieben. Es zeigen:
- Fig. 1: in schematischer Darstellung eine Tabelle, bei der für unterschiedliche Zel- len den Empfangsfeldstärken Entfernungen zugeordnet sind;
- Fig. 2: in schematischer Darstellung einen ersten Messbericht, den der Mobilfunk- teilnehmer X zum Zeitpunkt t₁ an die aktive Zelle sendet sowie die unter An- wendung von Tabelle 1 daraus ermittelten Entfemungsparameter zu bei- spielhaft zwei Sendestationen;
- Fig. 3: ein erstes Ortungsbeispiel, bei dem für den Messbericht von Fig. 2 zwei Ent- fernungsparameter sowie ein Öffnungswinkel zur Ermittlung des Standorts des Mobilfunkteilnehmers herangezogen werden;
- Fig. 4: in schematischer Darstellung einen zweiten Messbericht, den der Mobilfunk- teilnehmer X zum Zeitpunkt t₂ an die aktive Zelle sendet sowie die unter An- wendung von Tabelle 1 daraus ermittelten Entfemungsparameter zu bei- spielhaft drei Sendestationen;
- Fig. 5: ein zweites Ortungsbeispiel, bei dem für den Messbericht von Fig. 4 vier Ent- femungsparameter zur Ermittlung des Standorts des Mobilfunkteilnehmers herangezogen werden;
- Fig. 6: ein Beispiel für die Bestimmung des Orts des Mobilfunkteilnehmers zum Zeitpunkt t_{E} durch Interpolation bzw. zum Zeitpunkt t_{CA} durch Extrapolation; und
- Fig. 7: einen Screen-Shot zu lokalisierten Mobilfunkteilnehmern und Basisstationen.

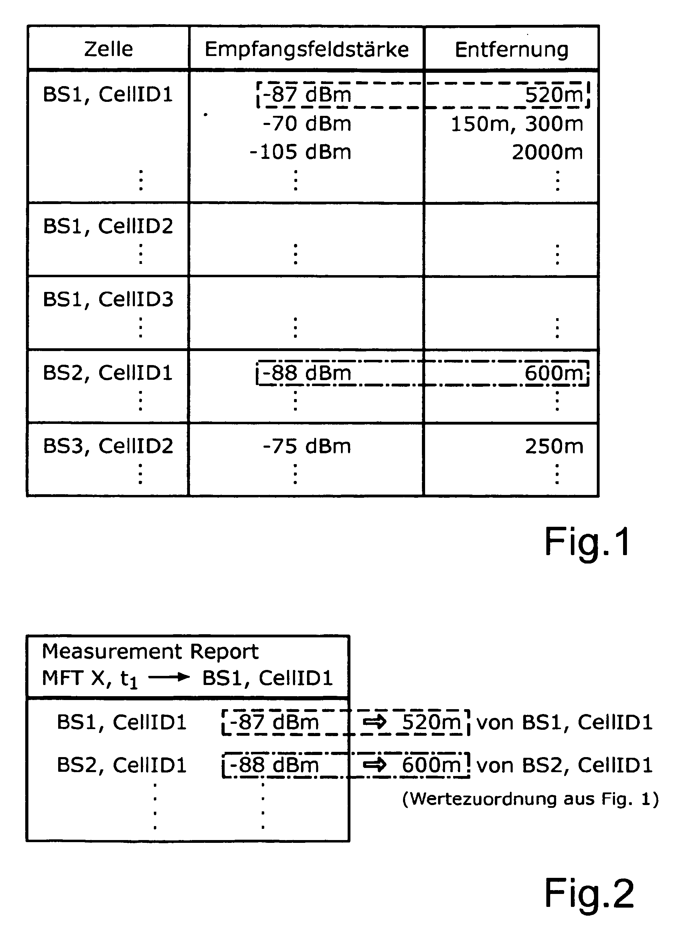

Fig. 1 zeigt eine Tabelle, in der für jede Zelle Wertepaare abgelegt sind, wobei jedes Wertepaar eine Empfangsfeldstärke bei einem Verbindungsaufbau und den dazu übertragenen Entfemungsparameter wiedergibt. Vorliegend ist zum besseren Verständnis der Entfernungsparameter in eine Entfernung des Mobilfunkteilnehmers zur Sendestation der entsprechenden Zelle umgerechnet. Bei einem GSM-Netz ist der Entfernungsparameter der Timing Advance-Parameter, während bei einem UMTS-Netz der Entfernungsparameter der Propagation Delay-Parameter ist. Die Erfindung ist selbstverständlich auf andere Netzstandards anwendbar, sofern auch dort Parameter übertragen werden, aus denen sich auf die Entfernung zwischen Mobilfunkteilnehmer und aktiver Sendestation rückschließen lässt.

Diese Tabelle wird bevorzugt in einer erfindungsgemäßen Ortungsvorrichtung angelegt, die am netzäußersten Knoten vor der Luftschnittstelle zum passiven Monitoren der Messberichte angeschlossen ist, beispielsweise in einer Basisstation bei einem GSM-Netz oder dem NodeB eines UMTS-Netzes. Die Ortungsvorrichtung kann jedoch auch bei einem hierarchiemäßig höheren Netzelement angeschlossen sein.

Wie aus der Tabelle zu entnehmen ist, kommen für eine Empfangsfeldstärke von -70 dBm der Zelle BS1, Cell ID1 zwei Entfernungen in Betracht, nämlich 150 m und 300 m.

Fig. 2 zeigt zunächst beispielhaft einen Messbericht, einen so genannten Measurement Report, den der Mobilfunkteilnehmer (MFT) X zum Zeitpunkt t₁ an die aktive Zelle, vorliegend die BS1, Cell ID1 sendet. Dieser Messbericht umfasst, bevorzugt nach Empfangsfeldstärken gegliedert, die Empfangsfeldstärken eines Referenzsignals, beispielsweise des CPiCh (= Common Pilot Channel)-Signals, das mit konstanter Leistung von den Sendestationen abgestrahlt wird, aller empfangbaren Sendestationen. Demnach wird die Sendestation BS1, Cell ID1 mit -87 dBm empfangen, die BS2, Cell ID1 mit -88 dBm. Sieht man nun die entsprechenden Empfangsfeldstärken für die jeweilige Sendestation in der Tabelle von Fig. 1 nach, so ergibt sich, dass der Mobilfunkteilnehmer X zum Zeitpunkt t₁ von der Sendestation der Zelle BS1, Cell ID1 520 m entfernt war, von der Sendestation der Zelle BS2, Cell ID1 600 m.

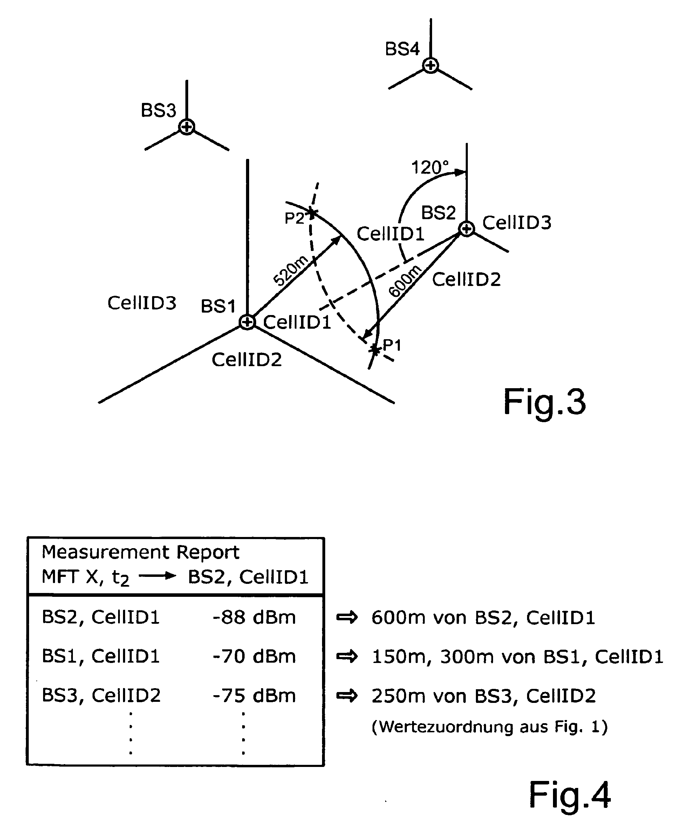

Fig. 3 zeigt nun eine Landkarte, in der zunächst vier Basisstationen BS1 bis BS4 eingetragen sind. Vorliegend weist jede Basisstation drei Zellen auf, die beispielhaft Cell ID1 bis Cell ID3 bezeichnet sind. Jede Cell ID hat daher einen Öffnungswinkel von 120° ausgehend von der in der zugeordneten Basisstation angeordneten Sendestation. Vorliegend ist die Sendestation jeder Cell ID in der zugehörigen Basisstation angeordnet.

Trägt man nun die gemäß Fig. 2 ermittelten Werte in die Karte von Fig. 3 ein, so ergibt sich ein Kreis mit einem Radius von 520 m um die Basisstation BS1 und ein Kreis mit einem Radius von 600 m um die Basisstation BS2. Die beiden Kreise schneiden sich in den Punkten P1 und P2. Zunächst kommen also diese beiden Punkte P1, P2 als Standort für den Mobilfunkteilnehmer X zum Zeitpunkt t₁ in Betracht. Berücksichtigt man nunmehr noch den Öffnungswinkel der Zelle BS2, Cell ID1, so kann der Punkt P1 ausgeschlossen werden. Der tatsächliche Standort des Mobilfunkteilnehmers X zum Zeitpunkt t₁ war demnach der Punkt P2.

Fig. 4 zeigt einen zweiten Measurement Report für den Mobilfunkteilnehmer X zum Zeitpunkt t₂, den der an die aktive Zelle BS2, Cell ID1 sendet. Durch Nachschlagen in der Tabelle von Fig. 1 ergibt sich eine Entfernung des Mobilfunkteilnehmers X zum Zeitpunkt t₂ von der Sendestation der Zelle BS2, Cell ID1 von 600 m, von der Sendestation der Zelle BS1, Cell ID1 von 150 m oder 300 m und von der Sendestation von der Zelle BS3, Cell ID2 von 250 m.

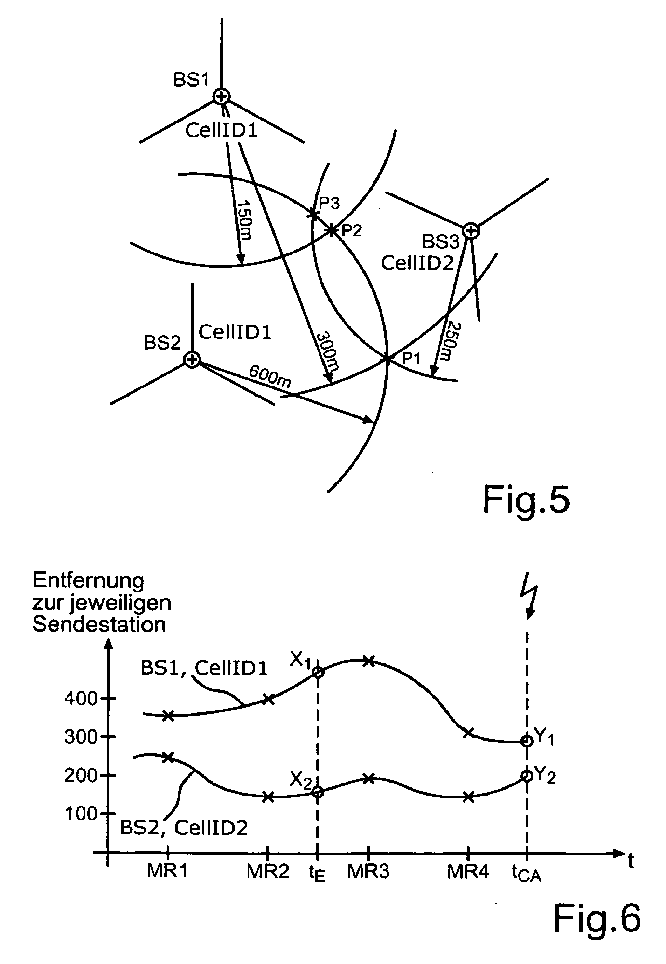

Fig. 5 zeigt für dieses Beispiel die sich ergebende Konstellation. Wertet man zunächst die Abstände von der Sendestation der Zelle BS2, Cell ID1 und BS1, Cell ID1 aus, so ergeben sich zwei mögliche Punkte P1 und P2. Wertet man hingegen zusätzlich noch die Entfernung des Mobilfunkteilnehmers von der Sendestation der Zelle BS3, Cell ID2 aus, so ergibt sich ein weiterer Schnittpunkt P3, wohingegen im Punkt P1 alle drei Entfernungsbedingungen erfüllt sind. Demnach ist der Punkt P1 der Standort des Mobilfunkteilnehmers X zum Zeitpunkt t₂.

Fig. 6 zeigt den zeitlichen Verlauf der Entfernungen des Mobilfunkteilnehmers X beispielhaft zur Sendestation der Zelle BS1, Cell ID1 sowie der Sendestation der Zelle BS2, Cell ID2. Eingetragen sind zunächst die sich aufgrund der in den Messberichten gesendeten Information ergebenden Punkte, die durch kleine Kreuze gekennzeichnet sind. Durch Interpolation lassen sich die Entfernungen auch für Zeitpunkte ermitteln, die zwischen den Zeitpunkten liegen, zu denen Messberichte gesendet werden. So kann dadurch mit hoher Genauigkeit zum Zeitpunkt t_{E}, an dem ein bestimmtes Ereignis stattgefunden hat, der Standort des Mobilfunkteilnehmers X durch Interpolation der Entfernungen ermittelt werden. Demnach war der Mobilfunkteilnehmer X zum Zeitpunkt t_{E} von der Sendestation der Zelle BS1, Cell ID1 X₁ m weg, von der Sendestation der Zelle BS2, Cell ID2 X₂ m. Bei einem Call-Abbruch steht eine Interpolation nicht zur Verfügung. Die Entfernungen zum Zeitpunkt t_{CA} des Call-Abbruchs werden vorliegend durch Extrapolation ermittelt. Demnach war der Mobilfunkteilnehmer X zum Zeitpunkt t_{CA} von der Sendestation der Zelle BS1, Cell ID1 Y₁ m weg, von der Sendestation der Zelle BS2, Cell ID2 Y₂ m. Selbstverständlich können bei dieser Vorgehensweise die Entfernungen zu weiteren Sendestationen ermittelt und bei der Ermittlung des Standorts berücksichtigt werden.

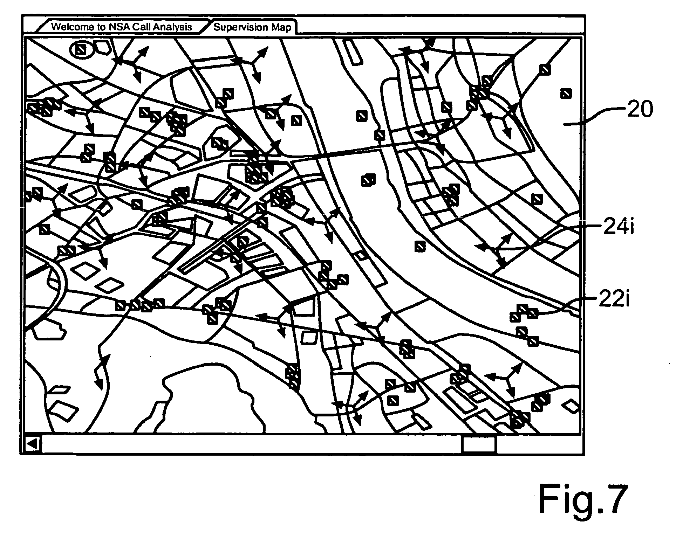

Fig. 7 zeigt einen Screen-Shot einer Anzeigevorrichtung 20 einer erfindungsgemäßen Ortungsvorrichtung, auf der eine Landkarte abgebildet ist, wobei auf dieser Landkarte die georteten Mobilfunkteilnehmer (die kleinen eingezeichneten Quadrate 22i) sowie die in dem abgebildeten geographischen Gebiet angeordneten Basisstationen 24i und die sich daraus ergebenden Zellen unter Berücksichtigung ihrer tatsächlichen Öffnungswinkel eingetragen sind. Geht man mit dem Cursor auf eines dieser Quadrate 22i beziehungsweise auf eine dieser eingetragenen Basisstationen 24i, so werden in einem Pop-Up-Fenster weitere Informationen zu dem Mobilfunkteilnehmer (insbesondere zu seiner Identifizierung mit Angaben zu seiner Verbindung usw.) zu der entsprechenden Mobilfunkverbindung beziehungsweise zu der entsprechenden Basisstation angezeigt.

Die Tabelle von Fig. 1 kann durch Drive-Tests mit weiteren Einträgen gefüllt werden, um, sofern nötig, eine noch feinere Rasterung und damit eine noch feinere Ortung des Mobilfunkteilnehmers zu ermöglichen. Wie bereits erwähnt ist eine erfindungsgemäße Messvorrichtung bevorzugt an der luB-Schnittstelle eines Mobilfunknetzes Mobilfunknetzes nach dem UMTS Standard angeordnet.

## Patentansprüche

1. Verfahren zur Ortung mindestens eines Mobilfunkgeräts in einem Mobilfunknetz, wobei das Mobilfunknetz zumindest folgende Eigenschaften umfasst:
- die kleinste adressierbare Einheit ist eine Zelle (BS1, Cell ID1; BS1, Cell ID2; BS1, Cell ID3), wobei jeder Zelle eine Sendestation zugeordnet ist;
- zumindest bei einem Verbindungsaufbau zum Übertragen von Sprache, Daten oder Kontrolldaten zwischen einem Mobilfunkgerät und einer Sendestation einer für das Mobilfunkgerät aktiven Zelle wird eine Information über eine Empfangsfeldstärke und ein mit der Entfernung des Mobilfunkgeräts zu der Sendestation der aktiven Zelle korrelierter Parameter durch die Sendestation der aktiven Zelle ermittelt;
- mit oder ohne aktiver Mobilfunkverbindung sendet ein Mobilfunkgerät mindestens einmal einen Messbericht, wobei in dem Messbericht eine Aufstellung vorgesehen ist, die mindestens zwei Sendestationen umfasst, wobei jeder Sendestation ein mit einer Empfangsfeldstärke eines Signals von dieser Sendestation korrelierter Wert zugeordnet ist;
- für mindestens einen im Messbericht gesendeten, mit der Empfangsfeldstärke korrelierten Wert wird ein zugeordneter Entfemungsparameter zur Sendestation der jeweiligen Zelle ermittelt;
- Ermitteln zumindest eines den Standort des Mobilfunkgeräts repräsentierenden Punkts, der den/die ermittelten Entfemungsparameter erfüllt;
**gekennzeichnet durch** folgende Schritte:
a) es wird zu jeder Zelle eine Tabelle angelegt, in der jeweiligen Empfangsfeldstärken mindestens ein Entfemungsparameter zur Sendestation der Zelle zugeordnet ist;
b) die jeweils zu einer Zelle angelegte Tabelle wird aus der information angelegt, die beim Verbindungsaufbau von Mobilfunkgeräten zur Sendestation dieser dann aktiven Zelle ermittelt wird;
c) zum Ermitteln des jeweiligen Entfemungsparameters für den mindestens einen im Messbericht gesendeten und mit der Empfangsfeldstärke korrelierten Wert wird der diesem zugeordnete, mindestens eine Entfemungsparameter aus der angelegten Tabelle der jeweiligen Zelle ausgelesen.

2. Verfahren nach Anspruch 1,
**dadurch gekennzeichnet,**
**dass** zum Ermitteln des Punkts zumindest ein Öffnungswinkel einer Sendestation einer Zelle berücksichtigt wird.

3. Verfahren nach einem der Ansprüche 1 oder 2,
**dadurch gekennzeichnet,**
**dass** aus den angelegten Tabellen die Entfernungsparameter zu mindestens zwei Sendestationen ausgelesen und zum Ermitteln des Punkts verwendet werden.

4. Verfahren nach einem der vorhergehenden Ansprüche,
**dadurch gekennzeichnet,**
**dass** zwischen den Zeitpunkten, zu denen Messberichte gesendet werden, für mindestens einen weiteren Zeitpunkt (t_{E}) und mindestens eine Sendestation die Empfangsfeldstärke und/oder der Entfemungsparameter zu der mindestens einen Sendestation durch interpolation ermittelt wird.

5. Verfahren nach einem der vorhergehenden Ansprüche,
**dadurch gekennzeichnet,**
**dass** nach einem Verbindungsabbruch ausgehend von den Entfemungsparametern, die anhand des zuletzt gesendeten Messberichts ermittelt wurden, der Entfemungsparameter zu mindestens einer Sendestation, bevorzugt zu mindestens zwei Sendestationen, für den Zeitpunkt (t_{CA}) des Verbindungsabbruchs durch Extrapolation ermittelt wird.

6. Verfahren nach einem der vorhergehenden Ansprüche,
**dadurch gekennzeichnet,**
**dass** der Messbericht fortwährend gesendet wird, bevorzugt regelmäßig alle 100 ms bis 10 s, oder ereignisbezogen, insbesondere beim Wechsel der Sendestation, die mit der größten Empfangsfeldstärke empfangen wird.

7. Verfahren nach einem der vorhergehenden Ansprüche,
**dadurch gekennzeichnet,**
**dass** der Entfemungsparameter aus dem Timing Advance-Parameter eines 2G-Mobilfunknetzes oder aus dem Propagation Delay-Parameter eines 3G-Netzes ermittelt wird oder diesem entspricht.

8. Verfahren nach einem der vorhergehenden Ansprüche,
**dadurch gekennzeichnet,**
**dass** die Tabelle nach Schritt b) für unterschiedliche Mobilfunkgeräte, insbesondere unterschiedliche Typen von Mobilfunkgeräten, angelegt wird und das Auslesen der Entfemungsparameter und/oder das Ermitteln des zumindest einen Punkts mobilfunkgerätespezifisch erfolgt.

9. Verfahren nach einem der vorhergehenden Ansprüche,
**dadurch gekennzeichnet,**
**dass** die Tabelle nach Schritt b) mit Testfahrten gewonnen wird.

10. Ortungsvonrichtung zur Ortung mindestens eines Mobilfunkgeräts in einem Mobilfunknetz, bei dem die kleinste adressierbare Einheit eine Zelle ist (BS1, Cell ID1; BS1, Cell ID2; BS1, Cell ID3), wobei jeder Zelle eine Sendestation zugeordnet ist; bei dem vorgesehen ist, dass mit oder ohne aktiver Mobilfunkverbindung ein Mobilfunkgerät mindestens einmal einen Messbericht sendet, wobei in dem Messbericht eine Aufstellung vorgesehen ist, die mindestens zwei Sendestationen umfasst, wobei jeder Sendestation ein mit einer Empfangsfeldstärke eines Signals von dieser Sendestation korrelierter Wert zugeordnet ist; wobei die Ortungsvorrichtung Mittel enthält.
- eine zumindest bei einem Verbindungsaufbau zum Übertragen von Sprache, Daten oder Kontrolldaten zwischen einem Mobilfunkgerät und einer Sendestation einer für das Mobilfunkgerät aktiven Zelle ermittelte Information über die Empfangsfeldstärke und einen mit der Entfernung des Mobilfunkgeräts zu der Sendestation der aktiven Zelle korrelierten Parameter zu empfangen;
- für mindestens einen im Messbericht gesendeten, mit der Empfangsfeldstärke korrelierten Wert einen zugeordneten Entfemungsparameter zur Sendestation der jeweiligen Zelle zu ermitteln; und
- zumindest einen den Standort des Mobilfunkgeräts repräsentierenden Punkt zu ermitteln, der den/die ermittelten Entfemungsparameter erfüllt;
**dadurch gekennzeichnet,**
**dass** die Ortungsvonichtung zusätzlich Mittel enthält, um:
- zu jeder Zelle eine Tabelle anzulegen, in der jeweiligen Empfangsfeldstärken mindestens ein Entfemungsparameter zur Sendestation der Zelle zugeordnet ist:
- die jeweils zu einer Zelle angelegte Tabelle aus der beim Verbindungsaufbau von Mobilfunkgeräten zu dieser dann aktiven Zelle ermittelten information anzulegen; und
- zum Ermitteln des jeweiligen Entfemungsparameters für den mindestens einen im Messbericht gesendeten und mit der Empfangsfeldstärke korrelierten Wert den diesem zugeordneten, mindestens einen Entfemungsparameter aus der angelegten Tabelle der jeweiligen Zelle auszulesen.

11. Ortungsvorrichtung nach Anspruch 10,
**dadurch gekennzeichnet,**
**dass** sie mindestens eine Speichervorrichtung zum Anlegen der Tabelle umfasst.

12. Ortungsvonichtung nach einem der Ansprüche 10 oder 11,
**dadurch gekennzeichnet,**
**dass** sie eine Anzeigevorrichtung umfasst, wobei die Ortungsvorrichtung ausgelegt ist, die Ortskoordinaten des ermittelten Punkts anzuzeigen.

13. Ortungsvorrichtung nach Anspruch 12,
**dadurch gekennzeichnet,**
**dass** sie ausgelegt ist, eine Landkarte mit dem ermittelten Punkt und den empfangbaren Sendestationen anzuzeigen.

14. Computerprogrammprodukt zur Ausführung eines Verfahrens nach einem der Ansprüche 1 bis 9.

## Claims

1. A method for locating at least one mobile radio device in a mobile radio network, wherein the mobile radio network includes at least the following characteristics:
- the smallest addressable unit is a cell (BS1, Cell ID1; BS1, Cell ID2; BS1, Cell ID3), wherein a transmitting station is associated with each cell;
- at least upon connection setup for transmitting language, data, or control data between a mobile radio device and a transmitting station of a cell that is active for the mobile radio device, an information about a receive field strength and a parameter correlated with the distance of the mobile radio device to the transmitting station of the active cell are determined by the transmitting station of the active cell;
- with or without an active mobile radio connection a mobile radio device transmits at least once a measuring report, wherein an itemisation is provided in the measuring report, which includes at least two transmitting stations, wherein each transmitting station is associated with a value correlated with a receive field strength of a signal from this transmitting station;
- for at least one value sent in the measuring report and correlated with the receive field strength an associated distance parameter to the transmitting station of the respective cell is determined;
- determining at least one point which fulfils the determined distance parameter(s) and which represents the position of the mobile radio device;
**characterized by** the following steps:
a) for each cell a table is created in which respective receive field strengths are associated with at least one distance parameter to the transmitting station of the cell;
b) the respective table created for a cell is created from the information established during connection setups of mobile radio devices to the transmitting station of the then active cell;
c) for determining the respective distance parameter for the at least one value sent in the measuring report and correlated with the receive field strength, the at least one distance parameter associated with it is read out from the created table of the respective cell.

2. The method according to claim 1,
**characterized in that**
for determining the point at least one opening angle of a transmitting station of a cell is taken into account.

3. The method according to any one of claims 1 or 2,
**characterized in that**
from the created tables the distance parameters to at least two transmitting stations are read out and used for determining the point.

4. The method according to any one of the preceding claims,
**characterized in that**
between the times at which measurement reports are transmitted, for at least one further time (t_{E}) and at least one transmitting station, the receive field strength and/or the distance parameter to the at least one transmitting station is determined by interpolation.

5. The method according to any one of the preceding claims,
**characterized in that**
after a connection abort, based on the distance parameters determined by way of the last transmitted measurement report, the distance parameter to at least one transmitting station, preferably to at least two transmitting stations, is determined for the time (t_{CA}) of the connection abort by extrapolation.

6. The method according to any one of the preceding claims,
**characterized in that**
the measurement report is repeatedly transmitted, preferably regularly every 100 ms to 10 s, or related to event, especially upon change of the transmitting station received with the greatest receive field strength.

7. The method according to any one of the preceding claims,
**characterized in that**
the distance parameter is determined from the timing advance parameter of a 2G mobile radio network or from the propagation delay parameter of a 3G network or corresponds thereto.

8. The method according to any one of the preceding claims,
**characterized in that**
the table according to step b) is created for different mobile radio apparatuses, especially different types of mobile radio apparatuses, and the reading-out of the distance parameters and/or the determining of the at least one point are effected specifically to the mobile radio apparatus.

9. The method according to any one of the preceding claims,
**characterized in that**
the table according to step b) is obtained by means of test drives.

10. A locating device for locating at least one mobile radio device in a mobile radio network, in which the smallest addressable unit is a cell (BS1, Cell ID1; BS1, Cell ID2; BS1, Cell ID3), wherein a transmitting station is associated with each cell;
in which it is provided that with or without active mobile radio connection a mobile radio device at least once sends a measuring report, the measuring report providing a list comprising at least two transmitting stations, wherein each transmitting station is associated with a value correlated with a receive field strength of a signal from this transmitting station;
wherein the locating device comprises means
- to receive both an information about the receive field strength determined at least upon connection setup for transmission of language, data, or control data between a mobile radio device and a transmitting station of a cell active for the mobile radio device and a parameter correlated with the distance of the mobile radio device to the transmitting station of the active cell;
- to determine for at least one value sent in the measuring report and correlated with the receive field strength an associated distance parameter to the transmitting station of the respective cell; and
- to determine at least one point representing the position of the mobile radio device satisfying the determined distance parameter(s);
**characterized in that**
the locating device additionally comprises means
- to create for each cell a table in which respective receive field strengths are each associated with at least one distance parameter to the transmitting station of the cell;
- to create the respective table created for a cell from the information established during connection setups of mobile radio devices for this then active cell; and
- for determining the respective distance parameter for the at least one value sent in the measuring report and correlated with the receive field strength, to read out the at least one distance parameter associated with it from the created table of the respective cell.

11. The locating device according to claim 10,
**characterized in that**
it includes at least one storage device for creating the table.

12. The locating device according to any one of claims 10 or 11,
**characterized in that**
it includes a display device, wherein the locating device is configured to display the local coordinates of the determined point.

13. The locating device according to claim 12,
**characterized in that**
it is configured to display a map with the determined point and the receivable transmitting stations.

14. A computer program product for performing a method according to any one of claims 1 to 9.

## Revendications

1. Procédé de localisation d'au moins un appareil radiotéléphonique mobile dans un réseau de téléphonie mobile, moyennant quoi le réseau de téléphonie mobile englobe au moins les propriétés suivantes :
- la plus petite unité adressable est une cellule (BS1, cellule ID1 ; BS1, cellule ID2 ; BS1, cellule ID3), moyennant quoi une station émettrice est affectée à chaque cellule ;
- au moins dans le cas de l'établissement d'une communication, destinée au transfert de la parole, de données ou de données de contrôle, entre un appareil radiotéléphonique mobile et une station émettrice, d'une cellule active pour l'appareil radiotéléphonique mobile, une information est déterminée sur une intensité de champ à la réception et un paramètre, corrélé avec l'éloignement de l'appareil radiotéléphonique mobile vis-à-vis de la station émettrice de la cellule active, par le biais de la station émettrice de la cellule active ;
- avec / ou sans liaison active de téléphonie mobile, un appareil radiotéléphonique mobile émet au moins une fois un rapport de mesure, moyennant quoi il est prévu, dans le rapport de mesure, un relevé, qui comprend au moins deux stations émettrices, moyennant quoi une valeur, corrélée avec l'intensité de champ à la réception d'un signal, provenant de cette station émettrice, est affectée à chaque station émettrice ;
- pour au moins une valeur, corrélée avec l'intensité de champ à la réception, envoyée dans le rapport de mesure, un paramètre de distance affecté est déterminé par rapport à la station émettrice de la cellule respective ;
- la détermination d'au moins un point, qui représente l'emplacement de l'appareil radiotéléphonique mobile et qui satisfait le(s) paramètre(s) de distance déterminé(s) ;
**caractérisé par** les étapes suivantes :
a) un tableau est créé par rapport à chaque cellule, dans lequel au moins un paramètre de distance, relatif à la station émettrice de la cellule, est affecté aux intensités respectives des champs à la réception ;
b) le tableau, créé respectivement par rapport à une cellule, est créé à partir de l'information, qui est déterminée lors de l'établissement d'une communication d'appareils radiotéléphoniques mobiles vis-à-vis de la station émettrice de cette cellule, devenue active ;
c) en vue de la détermination du paramètre respectif de distance pour la au moins une valeur, envoyée dans le rapport de mesure et corrélée avec l'intensité du champ à la réception, le au moins un paramètre de distance, qui lui est affecté, est extrait du tableau créé de la cellule respective.

2. Procédé suivant la revendication 1,
**caractérisé en ce**
**qu'**au moins un angle d'ouverture d'une station émettrice d'une cellule est pris en compte pour déterminer le point.

3. Procédé suivant l'une des revendications 1 ou 2,
**caractérisé en ce**
**que** les paramètres de distance, relatifs à au moins deux stations émettrices, sont extraits des tableaux créés et sont utilisés pour déterminer le point.

4. Procédé suivant l'une des revendications précédentes,
**caractérisé en ce**
**qu'**entre les moments, pour lesquels des rapports de mesure sont envoyés, pour au moins un autre moment (t_{E}) et au moins une station émettrice, l'intensité du champ à la réception et / ou le paramètre de distance, relatif à la au moins une station émettrice, est déterminé(e) par interpolation.

5. Procédé suivant l'une des revendications précédentes,
**caractérisé en ce**
**qu'**après une annulation de la communication à partir des paramètres de distance, qui ont été déterminés à l'aide du dernier rapport de mesure envoyé, le paramètre de distance, relatif à au moins une station émettrice, de préférence à au moins deux stations émettrices, est déterminé par extrapolation pour le moment (t_{CA}) de l'annulation de la communication.

6. Procédé suivant l'une des revendications précédentes,
**caractérisé en ce**
**que** le rapport de mesure est envoyé en continu, de préférence régulièrement toutes les 100 ms à 10 s ou en fonction des événements, en particulier lors du changement de station émettrice, qui est reçue avec la plus grande intensité de champ à la réception.

7. Procédé suivant l'une des revendications précédentes,
**caractérisé en ce**
**que** le paramètre de distance est déterminé à partir du paramètre Avance du temps d'un réseau de téléphonie mobile 2G ou du paramètre Délai de propagation d'un réseau 3G ou correspond à celui-ci.

8. Procédé suivant l'une des revendications précédentes,
**caractérisé en ce**
**que** le tableau suivant l'étape b) est créé pour différents appareils radiotéléphoniques mobiles, en particulier pour différents types d'appareils radiotéléphoniques mobiles et que l'extraction des paramètres de distance et / ou la détermination du au moins un point a lieu en fonction de l'appareil radiotéléphonique mobile.

9. Procédé suivant l'une des revendications précédentes,
**caractérisé en ce**
**que** le tableau suivant l'étape b) est obtenu avec des parcours d'essai.

10. Dispositif de localisation, destiné à localiser un appareil radiotéléphonique mobile dans un réseau de téléphonie mobile, pour lequel la plus petite unité adressable est une cellule (BS1, cellule ID1 ; BS1, cellule ID2 ; BS1, cellule ID3), moyennant quoi une station émettrice est affectée à chaque cellule ; pour lequel il est prévu qu'avec / ou sans liaison active de téléphonie mobile, un appareil radiotéléphonique mobile envoie au moins une fois un rapport de mesure, moyennant quoi il est prévu, dans le rapport de mesure, un relevé, qui comprend au moins deux stations émettrices, moyennant quoi une valeur, corrélée avec l'intensité de champ à la réception d'un signal, provenant de cette station émettrice, est affecté à chaque station émettrice ; moyennant quoi le dispositif de localisation comporte des moyens pour
- recevoir une information, déterminée, lors de l'établissement d'une communication en vue du transfert de la parole, de données ou de données de contrôle entre un appareil radiotéléphonique mobile et une station émettrice d'une cellule active pour l'appareil radiotéléphonique mobile, sur l'intensité de champ à la réception et un paramètre, corrélé avec l'éloignement de l'appareil radiotéléphonique mobile vis-à-vis de la station émettrice de la cellule active ;
- pour déterminer, pour au moins une valeur, envoyée dans le rapport de mesure, corrélée avec l'intensité de champ à la réception, un paramètre de distance affecté, vis-à-vis de la station émettrice de la cellule respective et
- pour déterminer au moins un point, qui représente l'emplacement de l'appareil radiotéléphonique mobile et qui satisfait le(s) paramètre(s) de distance déterminé(s) ;
**caractérisé en ce**
**que** le dispositif de localisation comporte, en plus, des moyens pour
- créer, par rapport à chaque cellule, un tableau, dans lequel au moins un paramètre de distance, vis-à-vis de la station émettrice de la cellule, est affecté aux intensités respectives de champ à la réception ;
- créer le tableau, créé respectivement par rapport à une cellule, à partir de l'information, déterminée lors de l'établissement de la communication d'appareils radiotéléphoniques mobiles par rapport à cette cellule, devenue active et
- pour déterminer le paramètre respectif de distance pour la au moins valeur, envoyée dans le rapport de mesure et corrélée avec l'intensité de champ à la réception, pour extraire le au moins un paramètre de distance, qui lui est affecté, du tableau créé de la cellule respective.

11. Dispositif de localisation suivant la revendication 10,
**caractérisé en ce**
**qu'**il comprend au moins un dispositif de mémoire, en vue de la création du tableau.

12. Dispositif de localisation suivant l'une des revendications 10 ou 11,
**caractérisé en ce**
**qu'**il comprend un dispositif d'affichage, moyennant quoi le dispositif de localisation est conçu pour afficher les coordonnées locales du point déterminé.

13. Dispositif de localisation suivant la revendication 12,
**caractérisé en ce**
**qu'**il est conçu pour afficher une carte de pays avec le point déterminé et les stations émettrices recevables.

14. Produit de programme informatique, destiné à exécuter un procédé suivant l'une des revendications 1 à 9.
